# EUROPEAN PATENT APPLICATION

(11) **EP 1 435 270 A1**
(43) Date of publication of application: **07.07.2004**
(21) Application number: 02755733.9
(22) Date of filing: 31.07.2002
(51) Int. Cl.: B23B 27/16

(54) **THROW-AWAY TIP**

(30) Priority: 10.08.2001 JP 2001243745; 28.05.2002 JP 2002153259
(71) Applicant: Sumitomo Electric Industries, Ltd., Osaka-shi, Osaka 541-0041 (JP)
(72) Inventor: UEDA, J., Itami Works, Sumitomo Electric Ind. Ltd., Itami-shi, Hyogo 664-0016 (JP); BABA, R., Itami Works, Sumitomo Electric Ind. Ltd., Itami-shi, Hyogo 664-0016 (JP); SAHASHI, T., Itami Works, Itami-shi, Hyogo 664-0016 (JP); KUKINO, S., Itami Works, Itami-shi, Hyogo 664-0016 (JP)
(74) Representative: Cross, Rupert Edward Blount
(86) International application number: PCT/JP2002/007827
(87) International publication number: WO 2003/015967

(57) **Abstract**

In conventional small-scale indexable inserts of a high-pressure sintered material has been a problem that, without a toolholder-clamping hole, attachment to a holder is complicated and the clamping force is weak. This is because readily machining a hole having a curved contour into a high-pressure sintered material has been difficult.

A clamping hole is machined into an indexable insert constituted from a high-pressure sintered material and a carbide to which it is unitarily sintered, by performing laser machining of the requisite conformation while adjusting the beam output power, enhancing by means of a galvanometer mirror the beam light-harvesting, and controlling to high precision the beam irradiating position. Small-scale indexable inserts of a high-pressure sintered material thereby may be readily and securely mounted by means of a clamping screw onto toolholders, which provides for shortened setup time, improved machining precision, and enhanced mounting reliability.

## Description

### Technical Field

The present invention relates principally to indexable inserts utilized in cutting work on metals, and to methods of manufacturing such inserts.

### Background Art

In machining iron/steel materials and aluminum alloys, high-precision, high-efficiency machining has been thrown into the spotlight as a crucial technological development issue, owing to demands in recent years for reduction in burden on the environment, let alone reduction in machining costs. As the solution, instances in which high-pressure sintered materials such as sintered cubic boron nitride (cBN) and sintered diamond are employed as cutting tools have been increasing.

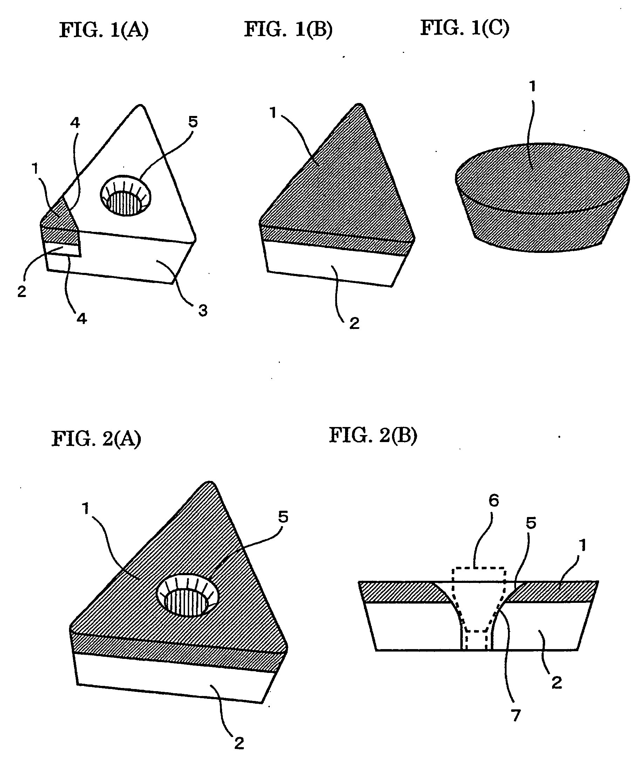

Compared with cemented carbides and ceramics, which have been employed to date, the resource cost of high-pressure sintered materials as cutting-tool materials is high. Accordingly, in applications in which high-pressure sintered materials have been employed for example in indexable inserts whose substrate is made of a carbide, the sintered materials, cut into size for the section that serves as the cutting edge, have been mounted into the substrate by brazing or a like technique. Fig. 1(A) is a specific example of this. A blank consisting of a high-pressure sintered material (1) and a carbide (2) is brazed via a brazing weld at (4) to a substrate (3) made of a carbide, and a clamping/locking hole (5), is formed in the substrate (3) before the substrate is sintered.

Indexable inserts come in geometries including relatively small-scale triangular or quadrangular shapes, used in small-bore drilling operations, and round shapes, likewise small-scale, utilized in profiling work. Among such indexable inserts are those in which the entire cutting face or the entire insert itself has been constituted by a high-pressure sintered material and that, not having a clamping/locking hole, have been wedged along the cutting-face against the toolholder with a clamping wedge to fasten them in place for use. Figs. 1(B) and 1(C) are specific examples of such inserts. In Fig. 1(B), the high-pressure sintered material (1) constituting the cutting face, and the carbide part (2) have been unitarily sintered. The indexable insert in Fig. 1(C) is constituted entirely of a high-pressure sintered material. These indexable inserts are not furnished with clamping/locking holes.

Indexable inserts provided with a clamping/locking hole have the advantage when being attached to the toolholder. As technology for boring a hole into an indexable insert once it has been molded, using a laser beam to produce a cylindrical through-hole through the cutting face to the mounting seat of a milling insert made of whisker-reinforced ceramic is disclosed in Japanese Pat. App. Pub. No. H04-2402. Likewise, a method of laser-machining a cBN sintered substance, synthesized by the direct-conversion method, that hardly contains any sintering additive is disclosed in Japanese Pat. App. Pub. No. H07-299577.

One problem with the above-described conventional indexable insert depicted in Fig. 1(A), in which a high-pressure sintered material is used, has been that with smaller-scale indexable inserts the size of the blank onto which the insert is brazed is small, meaning that with the brazing surface area being reduced the brazing weld sometimes comes loose under intermittent shock forces and repeated stresses during cutting work. To address this problem, indexable inserts are available that, rather than adopting a structure in which a blank is brazed into the cutting-edge section of the insert, have a structure as illustrated in Fig. 1(B) or 1(C), in which the entire cutting face or the entire insert itself is rendered a high-pressure sintered material, wherein there is no clamping/locking hole. Adopting a structure that renders the entire cutting face or the entire indexable insert itself a high-pressure sintered material makes it possible for the insert to have a number of cutting teeth, and by eliminating the brazing process, allows manufacturing costs to be reduced. That the inserts do not have clamping/locking holes has been because with it being extremely arduous to drill holes in high-pressure sintered materials using conventional technology, manufacturing at production costs that are within acceptable limits in terms of industrially practicability has not been possible.

The systems that have been adopted for cases where indexable inserts that do not have a clamping/locking hole are mounted rely on a technique in which a wedge is used to fasten the indexable insert by pressing on it alongside its cutting face, or a technique in which the insert is clamped between a shim and a clamping piece. In these cases, when machining workpieces from which, being highly ductile, chips are continuous and curl well, the chips strike on the head of the clamp and often damage it. This proves to be a factor that worsens the ability of the chips to flow away, such that they come into contact with and leave scoring marks on the surface of the workpiece, giving rise to inferior-quality cutting.

Another problem arises in machining cases where indexable inserts having high-pressure sintered materials for the cutting teeth are mounted on rotating tools such as endmills. With the tool rotating speed being fast because the inserts are generally employed under high-speed machining conditions in these cases, and with sufficient tightening force not being obtained with clamping systems that do not utilize clamping/locking holes, the inserts are liable to become loose from the toolholder due to centrifugal force produced during rotation. Moreover, with a clamping system that does not use clamping/locking holes, the number of parts for clamping/locking is great, which proves to be bulky, making multi-point design to specifications for small-diameter toolholders, for example φ20 mm or less, difficult.

As far as methods of machining holes as discussed above for clamping/locking are concerned, other than the laser machining method disclosed in the present invention, although techniques such as grinding using a rotary grindstone, ultrasonic machining, and electric-discharge machining are available, inasmuch as the machining speed on high-pressure sintered materials is extremely slow with these processing techniques, the shape of the grindstone, the ultrasonic irradiating gun, the electric-discharge electrode, etc. changes over time, making it impossible to preserve machining precision. With wire electric-discharge machining, a starter hole has to be machined, and in terms of machinable shapes, only cylindrical holes can be machined. What is more, in the case of high-pressure sintered materials that are not electrically conductive, electric-discharge machining is inapplicable. And as far as laser machining is concerned, with conventional methods thermal damage during machining can be considerable, such that there can be cases where latent cracks arise in the machined face, leading to destruction of the insert; moreover, likewise as with wire electric-discharge machining only cylindrical holes can be machined.

An issue for the present invention is to resolve the above-described problems in the technology to date by rendering indexable inserts that, with no structurally fragile portions, attach easily and securely to toolholders, and are superior for chip handling.

### Disclosure of Invention

In order to achieve the foregoing objective, instability strength-wise in the brazing weld is eliminated by employing, in itself as the main unit, a high-pressure sintered material sintered under ultra-high pressure unitarily onto a carbide; and expansion of the limits in which machining is feasible is rendered, owing to improvement in terms of strength and precision of attachment to the toolholder by providing a hole in the center portion of the cutting face for clamping onto the toolholder, and to reduction in the size of the tool overall.

In a second aspect of the present invention, furthermore, by constituting the entire indexable insert from a high-pressure sintered material, in addition to the foregoing effects, temperature elevation in the cutting edge while machining is decreased owing to the high level of thermal conductivity that the high-pressure sintered material possesses, which renders reduction of chipping and breakage in the cutting edge and improvement in the dimensional precision of the machining.

In the foregoing first and second aspects of the present invention, for cutting operations on ferrous metals such as steel, cast-metal objects, and stainless steel, a cubic boron nitride (cBN) sintered substance can be utilized as the high-pressure sintered material, and in cutting operations on non-ferrous metals such as die-cast aluminum alloys, magnesium alloys, and copper alloys, a diamond sintered substance can be. Either of these is high-strength, chemically stable at high temperatures, and has a high thermal conductivity.

Enlarging the overall geometry of indexable inserts rendered by the present invention would mean larger-sized high-pressure sintered materials utilized as the insert material, raising product costs, and would mean that the superiority in cost-performance ratio of the inserts of the invention as against indexable inserts employed to date, in which a high-pressure sintered material is brazed only into the cutting-edge section of the insert, would not be demonstrated. By the same token, if the overall geometry of inserts by the present invention were reduced to an extent to which the presence of the clamping hole provided in the center portion of the insert appreciably undermined the mechanical strength of the insert, stabilized cutting-tool performance would not be demonstrated. Accordingly, in cases where the geometry of an indexable insert of the present invention is a multi-cornered form, the diameter of the inscribed circle in the multi-cornered form that constitutes the outline of the indexable insert, projected onto the cutting face, is preferably 3 mm or more, 13 mm or less; in cases where the geometry is circular, the outside diameter of the indexable insert in a round form projected onto the cutting face is preferably 5 mm or more, 20 mm or less in diameter.

Machining the holder-clamping hole provided in the center portion of the indexable insert can be performed utilizing a high-power pulsed YAG laser in which the output power is adjusted and at the same time light-harvesting is enhanced using a galvanometer mirror, while progressively carving out the insert to contour lines by fixed machining amounts, by controlling output power, oscillating frequency, and milling pitch. With this laser machining method, holding down the total output power of the laser beam and enhancing its light-harvesting level makes it possible to lessen the thermal impact on the machining surface. In addition, directly transmitting to a laser-machining device, hooked up to be able to receive electronic data, shape-modeling data prepared with a three-dimensional CAD system, and installing in the laser-machining device a CAD-CAM system for automatically generating machining passes from the received shape-modeling data enables machining that is not limited only to general linear cutting work, but extends to intricate forms having irregularly curved surfaces.

The laser system just described can be utilized to provide the holder-clamping hole in the center portion of the indexable insert in, rather than a cylindrical shape whose diameter in the depth direction is uniform, a form whose diameter in horizontal cross section decreases going from the cutting-face side toward the mounting-seat side. The inclination that this shape lends to the hole inner surface brings the collar of the clamping screw―the portion that transmits the clamping force―and the sloping surface of the clamping hole into superficial contact, making the realization of stabilized clamping possible.

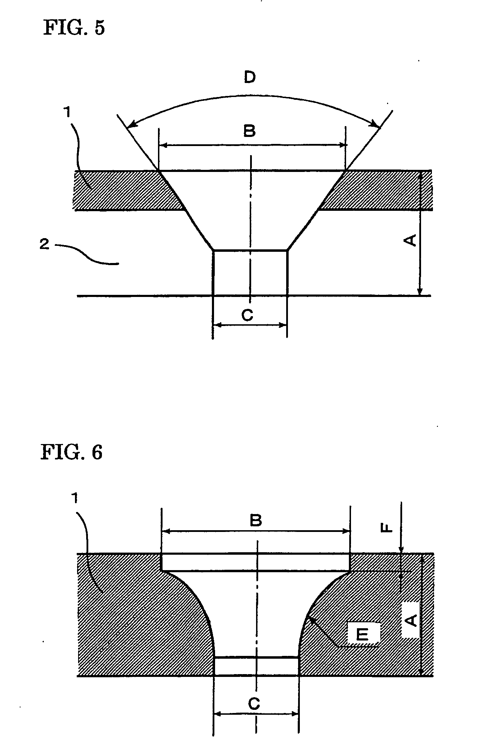

A specific shape that may be adopted for the clamping hole is, as shown in Fig. 5, one in which in cross-sectional form sectioned in a plane through the center axis of the hole, the cutting-face ends of sides corresponding to the lateral surface of the hole flare at a 45°-120° angle toward the cutting-face end, constituting as the lateral surface a conical shape, while the mounting-seat ends in cross-sectional form constitute parallel line segments―being a cylindrical form in terms of the lateral surface conformation. Alternatively, as shown in Fig. 2, a shape may be adopted in which the hole toward the cutting-face is configured in an arc in cross-sectional form opening toward the cutting face and as a side surface has a convexly curved conformation heading into the hole, and in which the mounting-seat end is cylindrical.

Ordinarily, the clamping hole in an indexable insert and the attachment hole in the toolholder are provided off-center, wherein the indexable insert is fastened firmly and with precision to the toolholder by the force (drawing-in force) in a direction parallel to the mounting seat, produced by tightening the clamping screw, and the counter-force from the walls against which the insert is clamped to the holder. The smaller the aforementioned flare angle of the hole in the cutting-face end is, the greater the just-noted drawing-in force will be. Conversely, the greater the flare angle of the hole in the cutting-face end is, the greater the clamping force heading toward the holder mounting seat will be. Accordingly, the clamping-hole conformation can be selected in conformance with the strength and mounting precision rendered necessary by the tool.

The form of the clamping hole in cross-section parallel to the cutting face is crucial―particularly the form of the portion of the hole where the damping screw contacts the indexable insert. If this cross-sectional form is significantly out-of-round―meaning that the clamping screw will only come into partial contact with the hole―the clamping force will concentrate in contact points scattered along the circumference of the hole, producing a concentration of non-uniform stress in the proximity of the clamping hole and leading to destruction of the indexable insert. It is therefore desirable that the form of the clamping hole in cross-section parallel to the cutting face, in the vicinity of where the hole contacts the clamping screw, is nearly a perfect circle. Incidence of tool failure in which stress-concentration is the causative factor can be controlled to a low frequency of occurrence if the out-of-round tolerance is within 20 µm. In order to design for more stability, an out-of-round tolerance that is within 10 µm is desirable. "Out-of-round tolerance" as used herein means the difference in radii between circles circumscribed on and inscribed in the form of a hole that is gauged.

In order to mitigate the concentrating as just noted of clamping force in scattered contact points, moreover, inserting a buffer material such as copper foil, aluminum foil, nylon resin, or vulcanite under the collar of the clamping screw is effective. For the buffer, then, one practice is to coat onto the damping screw materials such as Ti, Cr, TiN_{z} (0.1 ≤ z ≤ 0.93), Cu, or NiP using a method such as wet-plating, CVD or PVD. Another practice for the buffer likewise is to coat onto the indexable-insert cutting face and mounting-hole inner surface materials such as Ti, Cr, TiN_{(z)} (0.1 ≤ z ≤ 0.93), Cu, or NiP. In this case the coating-layer tint takes on a metallic sheen, making it easy to identify corners that have already been used, which, coupled with improvement from the coating layer in resistance of the indexable insert to wear, is again preferable.

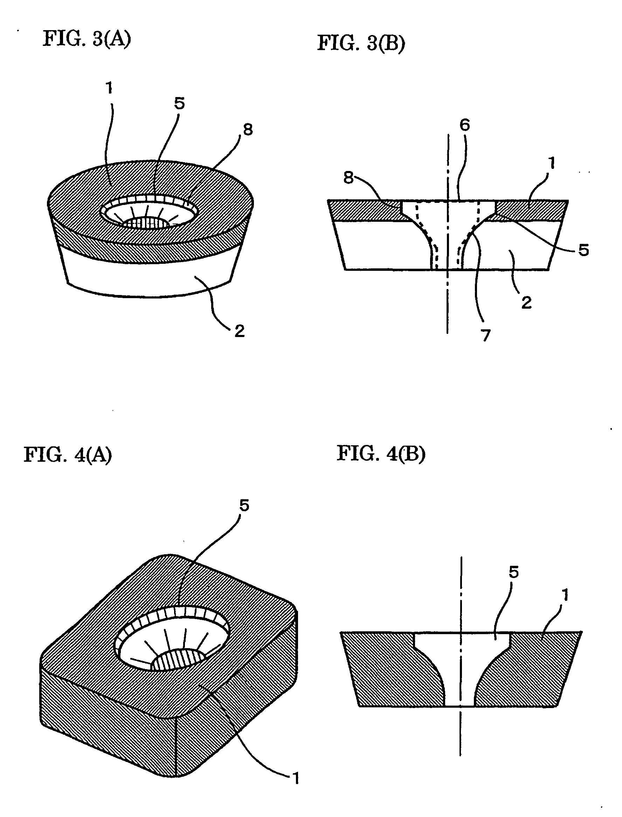

As illustrated in Fig. 3, by further imparting to the cutting-face end of the hole provided in the center portion of the indexable insert for clamping onto a toolholder a section in which for a given distance from the cutting face the hole diameter does not decrease, the clamping screw fastens in a position relatively lower than the indexable insert, wherein by making the crown of the damping screw lower than the cutting face, chip breaking can be prevented from interfering when machining highly ductile materials. Furthermore, in cases where the high-pressure sintered material sintered under ultra-high pressure unitarily onto a carbide, utilized in the first means for resolving the issue for the present invention, is utilized as a source material, by rendering the sloping surface serving as the part of the hole that contacts the clamping screw the high-durability carbide section, the tool main unit will be unlikely to break.

### Best Mode for Carrying Out the Invention

Embodiments of the present invention will be explained below based on Figs. 2-4.

Fig. 2 represents one example of an indexable insert according to an aspect of the present invention. The indexable insert is formed by unitarily sintering under ultra-high pressure a high-pressure sintered material part, at (1) in the figure, consisting of a cBN sintered substance or a diamond sintered substance, and a carbide part, at (2); and a clamping hole (5) portion of the indexable insert is formed in the center portion of its cutting face. As illustrated in section view in Fig. 2(B), the diameter of the hole (5) for clamping onto a toolholder is greatest at the cutting face, decreases heading toward the mounting seat, and from near the mid-portion of the indexable insert to the mounting seat the radius does not change. When being fitted onto a toolholder, the indexable insert is clamped by a clamping screw, indicated at (6) in Fig. 2(B), via a contact portion (7) of the screw. It is desirable that the clamping screw is made to contact on the higher-durability carbide section.

Fig. 3 represents an indexable insert according to a separate aspect of the present invention. In the cutting-face end of the toolholder-clamping-hole (5) portion of the indexable insert is an unchanging-diameter section (8); beyond that section toward the mounting seat the hole has a form that is the same as the toolholder-clamping-hole portion of the indexable insert depicted in Fig. 2 described above. In this aspect of the invention, because the clamping-screw contact portion (7) that contacts on the indexable insert is closer to the mounting seat―thanks to the presence of the just-described section in which the radius does not change―the crown portion of the screw is countersunk either flush with the cutting face or beyond that in a position recessed toward the mounting seat, and therefore the clamping screw in this case does not get in the way of the outflow of chips that pass over the cutting face.

Fig. 4 represents an indexable insert according to a still separate aspect of the present invention. The indexable insert is in its entirety formed from a cBN sintered substance or a diamond sintered substance, and is formed with a clamping hole having the same shape as in the aspect of the invention illustrated in Fig. 3. Forming the entire indexable insert utilizing a high-pressure sintered material having a high thermal conductivity raises the thermal conveyance of the tool overall, enabling swift dispersal to the holder part of heat in the cutting-edge section generated in instances such as during high-speed cutting without a coolant, which makes it possible to prevent chipping in the cutting edge section due to overheating, and decline in machining precision associated with thermal-expansion induced change in the tool conformation.

Next, details of the present invention will be explained with example embodiments by way of illustration.

### Embodiment 1

A blended powder was obtained by using a pot made of Teflon® and a carbide ball to mix, in ethanol, a binder powder of 1 µm or less average particle size, composed of, by weight, 30% TiN, 5% Ti, and 15% Al, together with 50% cBN powder of 2 µm average particle size; the mixture was heat-treated at 1000°C for 30 minutes within a vacuum atmosphere, charged into a carbide vessel and sintered 60 minutes under 4 GPa pressure at a temperature of 1300°C, yielding a cBN sintered compact. The sintered compact was assayed by X-ray diffraction, wherein cBN, TiN, TiB₂, AlB₂, AlN and Al₂O₃ were identified.

Laser machining was utilized to machine a hole of the shape depicted in Fig. 5 in cBN sintered compacts obtained by the foregoing, which were sintered unitarily with a cemented carbide. A DML-40 laser milling machine, manufactured by Lasertec (Deckel Maho) GmbH was utilized for the machining. The hole conformation had an overall thickness (A) of 3.97 mm; a hole diameter (B) in the cutting face of φ 7.0 mm; a hole diameter (C) in the mounting seat of φ 4.4 mm; and a flare angle (D), of the hole in the cutting-face end, of 60°. The machining conditions are set forth in Table I. As termed herein "Laser Power" indicates laser output power at the YAG rod exit; "Pulse Frequency," Q-switched pulse frequency; Milling Pitch, the feed width when scanned by a laser beam. The laser beam travel speed was made a fixed 500 mm/second.

**Table I**

| No. | Laser power W | Pulse freq. kHz | Milling pitch µm | Drilling op. time | Surface roughness µm | | Thermal-damage layer (carbide layer) µm |
|---|---|---|---|---|---|---|---|
| | | | | | Rz (cBN layer) | Rz (carbide layer) | |
| 1 | 60 | 20 | 15 | Carbide layer mach. imposs. | - | - | - |
| 2 | 60 | 20 | 30 | Carbide layer mach. imposs. | - | - | - |
| 3 | 60 | 20 | 50 | Carbide layer mach. imposs. | - | - | - |
| 4 | 70 | 20 | 15 | 25 min 42 s | 2.8 | 3.8 | 29 |
| 5 | 70 | 20 | 30 | 25 min 30 s | 3.1 | 4.2 | 27 |
| 6 | 70 | 20 | 50 | 25 min 11 s | 5.8 | 7.5 | 28 |
| 7 | 80 | 20 | 15 | 18 min 24 s | 2.9 | 4.2 | 33 |
| 8 | 80 | 20 | 30 | 18 min 10 s | 3.5 | 4.9 | 31 |
| 9 | 80 | 20 | 50 | 18 min 05 s | 6.5 | 7.9 | 31 |
| 10 | 90 | 20 | 15 | 13 min 11 s | 2.8 | 5.8 | 35 |
| 11 | 90 | 20 | 30 | 12 min 54 s | 3.6 | 6.2 | 31 |
| 12 | 90 | 20 | 50 | 12 min 50 s | 6.9 | 9.2 | 27 |
| 13 | 95 | 20 | 15 | 12 min 30 s | 3.0 | 5.7 | 38 |
| 14 | 95 | 20 | 30 | 12 min 21 s | 3.1 | 6.5 | 32 |
| 15 | 95 | 20 | 50 | 12 min 15 s | 7.3 | 11.8 | 33 |
| 16 | 100 | 20 | 15 | 10 min 33 s | 3.3 | 6.6 | 47 |
| 17 | 100 | 20 | 30 | 10 min 20 s | 4.0 | 7.3 | 42 |
| 18 | 100 | 20 | 50 | 10 min 07 s | 7.5 | 14.2 | 38 |
| 19 | 90 | 35 | 15 | 13 min 30 s | 3.0 | 6.4 | 33 |
| 20 | 90 | 50 | 15 | 13 min 55 s | 2.5 | 5.0 | 25 |

For each hole that was machined, the time required for machining in each case, the ten-point mean surface roughness (Rz) of the cBN section, and likewise the ten-point mean surface roughness (Rz) of the carbide section, of the inner surface of the hole portion, as well as the thickness of the thermal deformation layer in the carbide section were measured. From these results it was evident that as conditions under which machining in a relatively short time is possible, under which the character of the machined surface is favorable, and under which the extent of thermal damage is slight, suitable are: a laser power of 80-95 W, and a milling pitch of 15-30 µm. Here it is noted that the laser-oscillation pulse frequency was varied within a range of from 20 kHz to 50kHz, but no strong correlation to the character of the machined surfaces and the thermal-impact depth was apparent.

### Embodiment 2

A blended powder was obtained by using a pot made of Teflon® and a carbide ball to mix, in ethanol, a binder powder of 2 µm or less average particle size, composed of, by weight, 15% Co and 5% Al, together with 80% cBN powder of 5 µm average particle size; the mixture was heat-treated at 1200°C for 30 minutes within a vacuum atmosphere, charged into a carbide vessel and sintered 60 minutes under 5 GPa pressure at a temperature of 1400°C, yielding a cBN sintered compact. The sintered compact was assayed by X-ray diffraction, wherein cBN, CoWB, Co₂W₂B, AlN and AlB₂, as well as traces of WC and Al₂O₃ were identified.

Laser machining was utilized in the same way as in Embodiment 1 to machine a hole of the shape depicted in Fig. 6 in cBN sintered compacts, not containing cemented carbide, obtained by the foregoing. The hole conformation had an overall thickness (A) of 3.97 mm; a hole diameter (B) in the cutting face of φ 6.0 mm; a hole diameter (C) in the mounting seat of φ 3.9 mm; a radius of curvature (E), where the hole opens out toward the cutting-face end, of R=4.0 mm; and in the cutting-face end a fixed-radius section having a depth (F) of 0.45 mm. The machining conditions are set forth in Table II.

**Table II**

| No. | Laser power W | Pulse freq. kHz | Milling pitch µm | Drilling op. time | Surface roughness Rz (µm) | Thermal-damage layer µm |
|---|---|---|---|---|---|---|
| 1 | 50 | 20 | 15 | Mach. imposs. | - | - |
| 2 | 50 | 20 | 30 | Mach. imposs. | - | - |
| 3 | 50 | 20 | 50 | Mach. imposs. | - | - |
| 4 | 60 | 20 | 15 | 20 min 22 s | 2.2 | 15 |
| 5 | 60 | 20 | 30 | 20 min 10 s | 2.4 | 17 |
| 6 | 60 | 20 | 50 | 19 min 55 s | 3.6 | 14 |
| 7 | 70 | 20 | 15 | 15 min 42 s | 2.9 | 16 |
| 8 | 70 | 20 | 30 | 15 min 30 s | 3.0 | 18 |
| 9 | 70 | 20 | 50 | 15 min 11 s | 5.4 | 17 |
| 10 | 80 | 20 | 15 | 12 min 24 s | 3.0 | 22 |
| 11 | 80 | 20 | 30 | 12 min 10 s | 3.3 | 24 |
| 12 | 80 | 20 | 50 | 12 min 05 s | 6.2 | 24 |
| 13 | 90 | 20 | 15 | 9 min 11 s | 2.9 | 28 |
| 14 | 90 | 20 | 30 | 9 min 54 s | 3.4 | 27 |
| 15 | 90 | 20 | 50 | 9 min 50 s | 6.5 | 24 |
| 16 | 95 | 20 | 15 | 8 min 43 s | 3.1 | 33 |
| 17 | 95 | 20 | 30 | 8 min 31 s | 3.8 | 29 |
| 18 | 95 | 20 | 50 | 8 min 25 s | 6.6 | 32 |
| 19 | 100 | 20 | 15 | 7 min 33 s | 3.6 | 38 |
| 20 | 100 | 20 | 30 | 7 min 20 s | 4.5 | 40 |
| 21 | 100 | 20 | 50 | 7 min 07 s | 7.3 | 38 |

For each hole that was machined, the time required for machining in each case, the ten-point mean surface roughness (Rz) of the inner surface of the hole portion, as well as the thickness of the thermal deformation layer were measured. From these results it was evident that as conditions under which machining in a relatively short time is possible, under which the character of the machined surface is good, and under which the extent of thermal damage is slight, suitable are: a laser power of 70-95 W, and a milling pitch of 15-30 µm.

### Embodiment 3

A blended powder was obtained by using a carbide pot and ball to mix, in ethanol, 95% by weight diamond powder of 1 µm average particle size together with 5% Co powder of 1 µm or less average particle size; the mixture was heat-treated at 1200°C for 30 minutes within a vacuum atmosphere and laminated to a Co plate. The laminate was charged into a carbide vessel and sintered 60 minutes under 5 GPa pressure at a temperature of 1500°C, yielding a sintered diamond compact. The composition of the sintered compact was assayed by ICP, wherein it was volumetrically 87% diamond, with the Co being 8%, and the remainder being W and C.

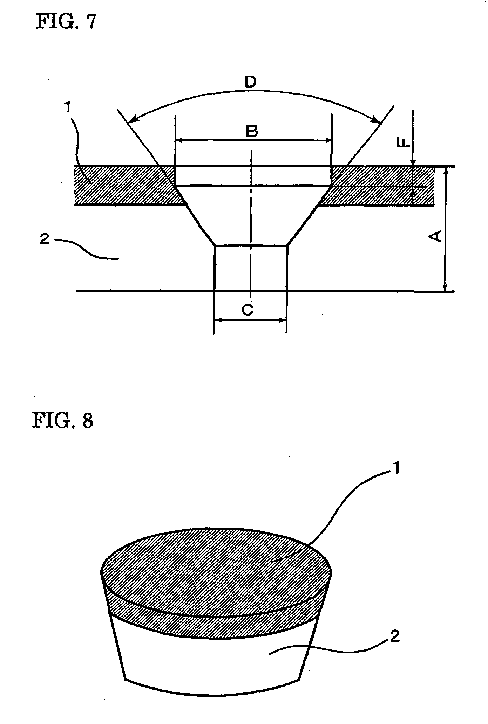

Laser machining was utilized in the same way as in Embodiment 1 to machine a hole of the shape depicted in Fig. 7 in sintered diamond compacts obtained by the foregoing, which were sintered unitarily with a cemented carbide. The hole conformation had an overall thickness (A) of 1.59 mm; a hole diameter (B) in the cutting face of φ 3.0 mm; a hole diameter (C) in the mounting seat of φ 2.2 mm; a flare angle (D), of the hole in the cutting-face end, of 60°; and in the cutting-face end a fixed-radius section having a depth (F) of 0.4 mm. The machining conditions are set forth in Table III.

**Table III**

| No. | Laser power W | Pulse freq. kHz | Milling pitch µm | Drilling op. time | Surface roughness Rz(µm) | Thermal-damage layer µm |
|---|---|---|---|---|---|---|
| 1 | 50 | 35 | 15 | 17 min 33 s | 2.1 | 18 |
| 2 | 50 | 35 | 30 | 17 min 21 s | 2.2 | 16 |
| 3 | 50 | 35 | 50 | 17 min 10 s | 3.3 | 15 |
| 4 | 60 | 35 | 15 | 15 min 22 s | 2.2 | 17 |
| 5 | 60 | 35 | 30 | 15 min 10 s | 2.4 | 17 |
| 6 | 60 | 35 | 50 | 15 min 02 s | 3.6 | 14 |
| 7 | 70 | 35 | 15 | 12 min 55 s | 2.9 | 19 |
| 8 | 70 | 35 | 30 | 12 min 40 s | 3.0 | 20 |
| 9 | 70 | 35 | 50 | 12 min 33 s | 5.4 | 17 |
| 10 | 80 | 35 | 15 | 11 min 32 s | 3.0 | 25 |
| 11 | 80 | 35 | 30 | 11 min 21 s | 3.3 | 28 |
| 12 | 80 | 35 | 50 | 11 min 15 s | 6.2 | 20 |
| 13 | 90 | 35 | 15 | 10 min 25 s | 4.5 | 58 |
| 14 | 90 | 35 | 30 | 10 min 15 s | 5.3 | 60 |
| 15 | 90 | 35 | 50 | 10 min 12 s | 9.5 | 55 |
| 16 | 95 | 35 | 15 | 9 min 55 s | - | Great damage to PCD part |
| 17 | 95 | 35 | 30 | 9 min 42 s | - | Great damage to PCD part |
| 18 | 95 | 35 | 50 | 9 min 32 s | - | Great damage to PCD part |

For each hole that was machined, the time required for machining in each case, the ten-point mean surface roughness (Rz) of the inner surface of the hole portion of the sintered diamond compact part, as well as the thickness of the thermal deformation layer were measured. From these results it was evident that as conditions under which machining in a relatively short time is possible, under which the character of the machined surface is good, and under which the extent of thermal damage is slight, suitable are: a laser power of 60-80 W, and a milling pitch of 15-30 µm.

### Embodiment 4

A blended powder was obtained by using a pot made of Teflon® and a carbide ball to mix, in ethanol, a binder powder of 1 µm or less average particle size, composed of, by weight, 25% TiN, 5% Ti and 18% Al, together with 52% cBN powder of 1 µm average particle size; the mixture was heat-treated at 1000°C for 30 minutes within a vacuum atmosphere, charged into a carbide vessel and sintered 60 minutes under 4.8 GPa pressure at a temperature of 1350°C, yielding a cBN sintered compact. The sintered compact was assayed by X-ray diffraction, wherein cBN, TiN, TiB_{2,} AlB₂, AlN and Al₂O₃ were identified.

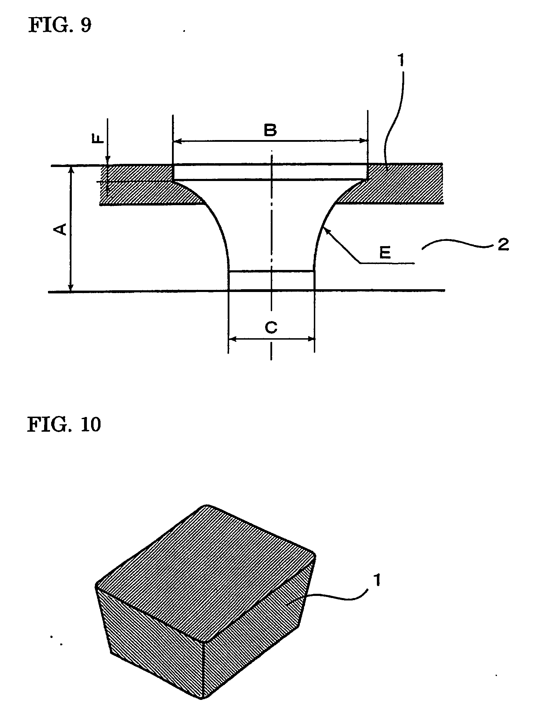

The cBN sintered compact obtained by the foregoing, which was sintered unitarily with a cemented carbide, was cut into form by wire electric-discharge machining, and then underwent a peripheral polishing operation, whereby a round indexable insert, represented in Fig. 8, of 10 mm diameter and 3.18 mm thickness was fabricated. In addition, laser machining was utilized to machine in the insert a hole of the shape depicted in Fig. 9. The hole conformation had an overall thickness (A) of 3.18 mm; a hole diameter (B) in the cutting face of φ 6.0 mm; a hole diameter (C) in the mounting seat of φ 3.9 mm; a radius of curvature (E), where the hole opens out toward the cutting-face end, of R=4.0 mm; and in the cutting-face end a fixed-radius section having a depth (F) of 0.45 mm. The conditions under which the machining was implemented were: laser output power, 90 W and pulse frequency, 25 kHz; milling pitch, 15 µm.

As an example for comparison to this, electric-discharge machining was used to implement formation, into a sintered compact identical with that just described, of a hole having the same conformation. In the electric-discharge machining operation, at first, in order to bore a through-hole from the cutting face to the mounting seat electric-discharge machining was carried out using an electrode 1 mm in diameter; next, the hole was machined cylindrically to 3.9 mm in diameter by wire electric-discharge machining; then, an electric-discharge electrode that had been worked into the final shape of the hole was used to implement electric-discharge machining on the hole and lend it the conformation in Fig. 8.

Results of the machining operations just described are set forth in Table IV.

**Table IV**

| | Hole-machining method | Boring op. time (min) | Surface roughness Rz (µm) |
|---|---|---|---|
| No. 1 | Laser machining | 12 min 12 s | cBN: 2.48 Carbide: 3.8 |
| Compar. ex. 1 | Electric-discharge machining (EDM + WEDM) | 108 min | cBN: 3.11 Carbide: 4.8 |

To machine holes of identical conformation, machining could be done in an extremely short time in the boring operation by means of laser machining, compared with electric-discharge machining.

### Embodiment 5

A blended powder was obtained by using a pot and ball made of Teflon® to mix, in ethanol, 30% by weight cBN powder of 5 µm or less average particle size together with 70% cBN powder of 10 µm average particle size; the mixture was heat-treated at 1000°C for 30 minutes within a vacuum atmosphere, and laminated to an Al plate. The laminate was charged into a carbide vessel and sintered 60 minutes under 4.8 GPa pressure at a temperature of 1350°C, yielding a cBN sintered compact. The sintered compact was assayed by X-ray diffraction, wherein cBN, AlN and AlB₂ were identified.

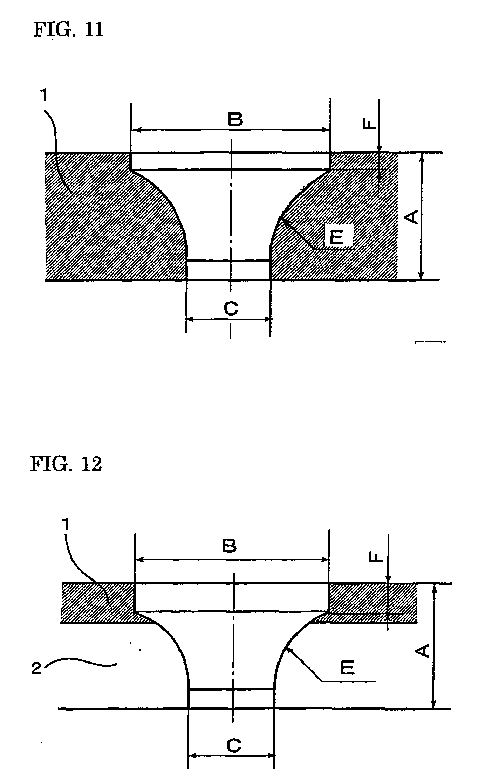

Inasmuch as the cBN sintered compact―which did not contain cemented carbide―obtained by the foregoing, was in not possessing electrical conductivity not machinable by electric discharge, it was cut into form by high-power laser machining, and then underwent a peripheral polishing operation, whereby a diamond-shaped indexable insert, represented in Fig. 10, of 6.35 mm inscribed diameter and 2.38 mm thickness was fabricated. Subsequently, laser machining was utilized to machine in the center portion of the indexable insert a hole of the shape depicted in Fig. 11. The hole conformation had an overall thickness (A) of 2.83 mm; a hole diameter (B) in the cutting face of φ 3.75 mm; a hole diameter (C) in the mounting seat of φ 2 mm; a radius of curvature (E), where the hole opens out toward the cutting-face end, of R=2.8 mm; and in the cutting-face end a fixed-radius section having a depth (F) of 0.3 mm. The conditions under which the machining was implemented were: laser output power, 85 W and pulse frequency, 30 kHz; milling pitch, 25 µm.

As an example for comparison to this, a grinding operation with grindstones was used to implement formation of a hole having the same conformation. In the grinding operation using grindstones, at first a cylindrical hole was machined using a cylindrical grindstone cast in a diameter of 2.8 mm and thereafter was finished into final form using a grindstone manufactured in a mold to the conformation of the hole.

Results of the machining operations just described are set forth in Table V.

**Table V**

| | Hole-machining method | Boring op. time (min) | Surface roughness Rz (µm) |
|---|---|---|---|
| No. 1 | Laser machining | 12 min 12 s | 2.37 |
| Compar. ex. 1 | Grindstone-grinding operation | 80 hrs | 2.05 |

To machine holes of identical conformation, machining could be done in an extremely short time in the boring operation by means of laser machining, compared to the grinding operation using grindstones. As indicated in the present embodiment, with the processing speed of laser machining according to the present invention being, as against the grinding operation, strikingly great, for boring work on high-pressure sintered materials that in not possessing electrical conductivity are not electric-discharge machinable there is great merit to laser machining by the present invention.

### Embodiment 6

A blended powder was obtained by using a carbide pot and ball to mix, in ethanol, 95% by weight diamond powder of 1 µm average particle size together with 5% Co powder of 1 µm or less average particle size; the mixture was heat-treated at 1200°C for 30 minutes within a vacuum atmosphere and laminated to a Co plate. The laminate was charged into a carbide vessel and sintered 60 minutes under 5 GPa pressure at a temperature of 1500°C, yielding a sintered diamond compact. The composition of the sintered compact was assayed by ICP, wherein it was volumetrically 87% diamond, with the Co being 8%, and the remainder being W and C.

The sintered diamond compact obtained by the foregoing, which was sintered unitarily with a cemented carbide, was cut into form by wire electric-discharge machining, then through a peripheral polishing operation after this was cut into form by wire-cutting, an equilateral triangular insert of φ 3.97 mm inscribed diameter and 1.59 mm thickness by the peripheral polishing was fashioned. In addition, laser machining was utilized to machine in the indexable insert a hole of the shape depicted in Fig. 12. The hole conformation had an overall thickness (A) of 1.59 mm; a hole diameter (B) in the cutting face of φ 3.0 mm; a hole diameter (C) in the mounting seat of φ 2.2 mm; a radius of curvature (E), where the hole opens out toward the cutting-face end, of R=3.0 mm; and in the cutting-face end a fixed-radius section having a depth (F) of 0.4 mm. The conditions under which the machining was implemented were: laser output power, 70 W and pulse frequency, 35 kHz; milling pitch, 15 µm.

As an example for comparison to this, electric-discharge machining was used to implement formation, into a sintered compact identical with that just described, of a hole having the same conformation. In the electric-discharge machining operation, at first, in order to bore a through-hole from the cutting face to the mounting seat electric-discharge machining was carried out using an electrode 1 mm in diameter; next, the hole was machined cylindrically to 2.2 mm in diameter by wire electric-discharge machining; then, an electric-discharge electrode that had been worked into the final shape of the hole was used to implement electric-discharge machining on the hole and lend it the conformation in Fig. 12.

Results of the machining operations just described are set forth in Table VI.

**Table VI**

| | Hole-machining method | Boring op. time (min) | Surface roughness Rz (µm) |
|---|---|---|---|
| No. 1 | Laser machining | 12 min 25 s | PCD: 2.87 Carbide: 4.9 |
| Compar. ex. 1 | Electric-discharge machining (EDM + WEDM) | 101 min | cBN: 2.98 Carbide: 4.3 |

To machine holes of identical conformation, machining could be done in an extremely short time in the boring operation by means of laser machining, compared with electric-discharge machining.

### Embodiment 7

The strength of indexable inserts to withstand the clamping torque was investigated by varying the cross-sectional form, parallel to the cutting face, of the part of the clamping hole that the clamping screw contacts. cBN sintered compacts prepared in Embodiment 2 were utilized to create diamond-shaped indexable inserts of φ 6.35 mm inscribed diameter and 2.38 mm thickness; through their center portion a clamping hole was drilled by laser machining, and an M3.5 flathead screw was used to clamp them to a toolholder.

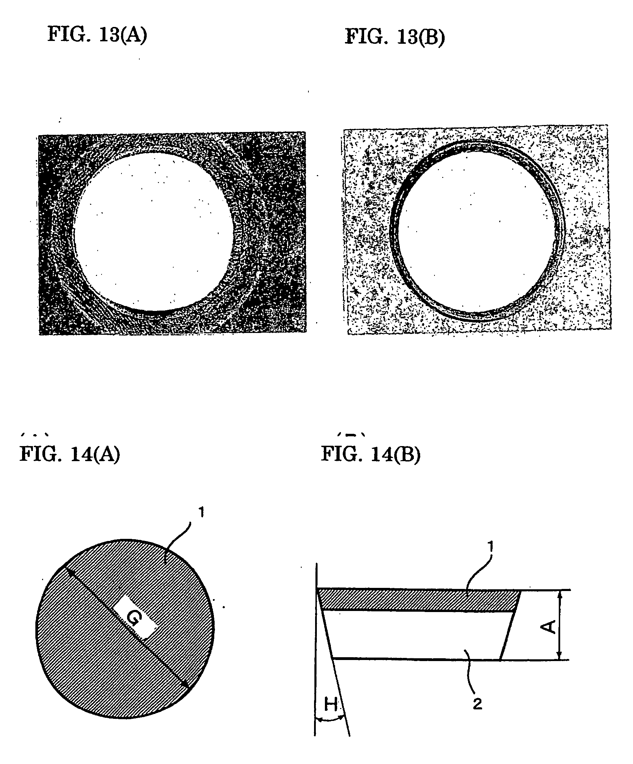

Evaluations of two categories of holes―ones in which the difference in diameter between inscribed and circumscribed circles in cross section, parallel to the cutting face, of the part that comes into contact with the clamping screw was 24 µm (Fig. 13(A)), and ones in which the difference was 8 µm (Fig. 13(B))―were made with respective clamping screws that were wrapped under the collar with copper foil as a buffer material, and with ones that were not so wrapped. A test was conducted on 5 indexable inserts per each of several testing conditions; the indexable inserts were tightened with a torque wrench onto the toolholder to a predetermined clamping force, and were evaluated by the number in which cracking arose. Here it is noted that the standard tightening torque for the clamping screws used in the tests is 2.5 N·m. The test results are set forth in Table VII.

**Table VII**

| | Tightening torque value (N•m) | | | | | |
|---|---|---|---|---|---|---|
| | 2.0 | 2.5 | 3.0 | 3.25 | 3.5 | 3.75 |
| No. 1 | Good | 2 | NG | NG | NG | NG |
| No. 2 | Good | Good | 3 | NG | NG | NG |
| No. 3 | Good | Good | Good | 1 | 3 | NG |
| No. 4 | Good | Good | Good | Good | Good | 1 |

In Table VII: No. 1 is where the difference in diameter between the inscribed and circumscribed circles was 24 µm; No. 2 is where a copper foil buffer material was used on No. 1; No. 3 is where the difference in diameter between the inscribed and circumscribed circles was 8 µm; and No. 4 is where a copper foil buffer material was used on No. 3. In the table, the "Good" mark is where no cracks arose in the indexable inserts; "NG" is where cracking occurred in all of the indexable inserts; and the numerals indicate the number in which cracking arose among the 5 items that underwent the test. Where the cross-sectional form, parallel to the cutting face, of the part of the clamping hole that the clamping screw contacts was nearly a true circle the strength of the indexable insert against cracking was higher; likewise, providing a buffer material in between the clamping screw and the indexable insert made lowering the vulnerability of the indexable insert to cracking possible. Here it is noted that in the case of the cBN sintered compacts unitarily sintered with a carbide substance, in those instances where the area that comes into contact with the clamping screw was in the carbide part, in that cracking did not develop in the indexable inserts under the testing conditions of the present experiment, there were no problems with their resistance against cracking due to the tightening of the clamping screw.

### Embodiment 8

A blended powder was obtained by using a pot made of Teflon® and a carbide ball to mix, in ethanol, a binder powder of 1 µm or less average particle size, composed of, by weight, 20% TiN, 5% Ti, and 25% Al, together with 50% cBN powder of 1 µm average particle size; the mixture was heat-treated at 1000°C for 30 minutes within a vacuum atmosphere, charged into a carbide vessel and sintered 60 minutes under 4.5 GPa pressure at a temperature of 1350°C, yielding a cBN sintered compact. The sintered compact was assayed by X-ray diffraction, wherein cBN, TiN, TiB₂, AlB₂, AlN and Al₂O₃ were identified.

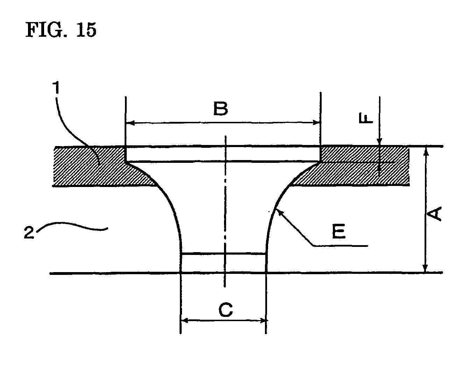

From the cBN sintered compact obtained by the foregoing, which was sintered unitarily with a cemented carbide, a circular indexable insert, represented in Fig. 14, was fashioned in a conformation of diameter, φ 7 mm; thickness, 1.99 mm; and relief angle, 15°. A clamping hole of the shape depicted in Fig. 15 was drilled through the center portion of this indexable insert by laser machining. The hole conformation had an overall thickness (A) of 1.99 mm; a hole diameter (B) in the cutting face of φ 3.65 mm; a hole diameter (C) in the mounting seat of φ 2.75 mm; a radius of curvature (E), where the hole opens out toward the cutting-face end, of R=2.85 mm; and in the cutting-face end a fixed-radius section having a depth (F) of 0.45 mm. The conditions under which the machining was implemented were: laser output power, 90 W and pulse frequency, 25 kHz; milling pitch, 15 µm.

This indexable insert was fitted, using a clamping screw, to a toolholder for an endmill 20 mm in diameter, and helical milling was carried out to conduct an evaluation of the chip-discharging ability. A tempered SKD-61 material (HRC-63) was employed for the workpiece. As a comparison, a cutting test was implemented under the same conditions on the foregoing circular indexable insert, but in which mounting-hole formation had not been carried out, fitted to a toolholder adopting the clamp-on system for attachment in which a clamp is used along the cutting face of the indexable insert. The test results are set forth in Table VIII.

**Table VIII**

| | Endmill dia. | No. of edges | Milling conditions | | | Chip-discharging ability |
|---|---|---|---|---|---|---|
| | | | Cutting speed (m/min) | Feed rate (mm/edge) | Depth of cut (mm) | |
| No. 1 | φ20 | 4 | 600 | 0.05 | 0.2 | Good |
| | | | 600 | 0.07 | 0.2 | Good |
| | | | 600 | 0.1 | 0.5 | Good |
| | | | 600 | 0.13 | 0.5 | Good |
| Compar. Ex. 1 | φ20 | 3 | 600 | 0.05 | 0.2 | Good |
| | | | 600 | 0.07 | 0.2 | Good |
| | | | 600 | 0.1 | 0.5 | NG |
| | | | 600 | 0.13 | 0.5 | NG |

In the table, "Good" indicates that chip flow was favorable; "NG," that unacceptability was produced in the machined surface due to the chips biting into it. In the cases where a clamping hole was drilled into the inserts and they were mounted to the toolholder by means of the clamping screw, because there were no obstacles to the flow of chips on the cutting face stabilized machining with no chip jam-ups was possible, compared with which in the cases where mounting was by the clamp-on system, incidents of chip jamming arose.

What is more, in the case of mounting by the clamp-on system, because the part configuration is intricate, the number of inserts, each with a cutting edge, that can be fitted to the toolholder turns out to be 3; therefore, if milling conditions are determined so that the per-edge feed rate will be the same, the actual milling speed of an endmill with 4 inserts/edges utilizing indexable inserts with holes will be faster.

In addition, in cases where high-speed cutting is carried out the toolholder rpm rise, augmenting the centrifugal force acting on the indexable inserts. In such cases, if mounting is by the clamp-on system there is a likelihood of the indexable inserts flying off, but there is not risk with the method of mounting by clamping screws using clamping holes.

### Industrial Applicability

As described above, the present invention renders indexable inserts whose endurance against shocking forces and repeated stresses during cutting operations is high, that are easy to attach to toolholders, and with which, because the mounting hardware does not stick out appreciably on the insert exterior interference with the machined material is negligible and chip-discharging ability is favorable.

### Brief Description of Drawings

Fig. 1 is a conventional indexable insert of a high-pressure sintered material;
Fig. 2 is an indexable insert according to the present invention, in a type in which a high-pressure sintered material and a carbide are united;
Fig. 3 is an indexable insert according to the present invention, in a type in which a high-pressure sintered material and a carbide are united;
Fig. 4 is an indexable insert, according to the present invention, of a high-pressure sintered material;
Fig. 5 is an indexable-insert hole conformation, illustrating Embodiment 1;
Fig. 6 is an indexable-insert hole conformation, illustrating Embodiment 2;
Fig. 7 is an indexable-insert hole conformation, illustrating Embodiment 3;
Fig. 8 is an indexable-insert illustrating Embodiment 4;
Fig. 9 is an indexable-insert hole conformation, illustrating Embodiment 4;
Fig. 10 is an indexable-insert illustrating Embodiment 5;
Fig. 11 is an indexable-insert hole conformation, illustrating Embodiment 5;
Fig. 12 is an indexable-insert hole conformation, illustrating Embodiment 6;
Fig. 13 is a clamping-hole conformation, illustrating Embodiment 7, wherein
   (A) is where difference in diameter between inscribed and circumscribed circles is 24 µm, and
   (B) is where difference in diameter between inscribed and circumscribed circles is 8 µm;
Fig. 14 is an indexable-insert illustrating Embodiment 8; and
Fig. 15 is an indexable-insert hole conformation, illustrating Embodiment 8.

## Claims

1. An indexable insert, comprising a high-pressure sintered material constituting a cutting face, and a carbide for supporting said high-pressure sintered material, **characterized in** including in the center portion of the cutting face a hole for attachment onto a toolholder.

2. An indexable insert, constituted entirely by a high-pressure sintered material, **characterized in** having in the center portion of its cutting face a hole for attachment onto a toolholder.

3. An indexable insert as set forth in claim 1 or 2, **characterized in that** said high-pressure sintered material is sintered cubic boron nitride (cBN) or a sintered diamond substance.

4. An indexable insert as set forth in any of claims 1-3, **characterized in that** the diameter of the inscribed circle in a multi-cornered form that constitutes the outline of the indexable insert, projected onto the cutting face, is 3 mm or more and 13 mm or less.

5. An indexable insert as set forth in any of claims 1-3, **characterized in that** the outside diameter of the indexable insert in a round form projected onto the cutting face is 5 mm or more and 20 mm or less in diameter.

6. An indexable insert as set forth in any of claims 1-5, **characterized in that** formation of said toolholder attachment hole is carried out by laser machining.

7. An indexable insert as set forth in any of claims 1-6, **characterized in that** the diameter of said toolholder attachment hole gradually decreases going from the cutting-face side toward a mounting-seat side of the insert.

8. An indexable insert as set forth in any of claims 1-7, **characterized in that** the diameter of said toolholder attachment hole abruptly decreases in a section near the cutting face, the rate of decrease gradually lessens, and the diameter does not decrease in the mounting-seat vicinity.

9. An indexable insert as set forth in any of claims 1-8, **characterized in that** the diameter of said toolholder attachment hole has a section that for a fixed distance from the cutting face does not decrease.

10. A method of manufacturing an indexable insert as set forth in any of claims 1-9, **characterized in** utilizing a pulse-oscillation YAG laser whose output power is 50-100 watts to form in the indexable insert, whose entire cutting face or otherwise whose entirety is constituted from a high-pressure sintered material, said toolholder attachment hole.
